# EUROPÄISCHE PATENTSCHRIFT

(11) **EP 3 795 227 B1**
(45) Veröffentlichungstag und Bekanntmachung des Hinweises auf die Patenterteilung: **01.06.2022**
(21) Anmeldenummer: 20191091.6
(22) Anmeldetag: 14.08.2020
(51) Int. Cl.: B01D 29/15, B01D 29/92, B01D 35/31

(54) **FILTERVORRICHTUNG**
FILTER DEVICE
DISPOSITIF FILTRANT

(30) Priorität: 17.09.2019 DE 102019006558
(43) Veröffentlichungstag der Anmeldung: 24.03.2021
(73) Patentinhaber: Hydac Filtertechnik GmbH, 66280 Sulzbach/Saar (DE)
(72) Erfinder: Hennes, Stefan, 66540 Neunkirchen (DE); Fiedler, Sebastian, 66583 Spiesen-Elversberg (DE)
(74) Vertreter: Bartels und Partner, Patentanwälte

(56) Entgegenhaltungen:
- DE-A1-102015 010 562
- DE-A1-102017 011 278
- DE-B3-102010 027 069

## Beschreibung

Die Erfindung betrifft eine Filtervorrichtung zum Filtern von Fluid, insbesondere in Form einer wässrigen Harnstofflösung, mit den Merkmalen im Oberbegriff von Anspruch 1.

Eine Filtervorrichtung der vorstehend genannten Gattung ist im Dokument DE 10 2015 010 562 A1 offenbart. Wenn solche Filtervorrichtungen in der Automobiltechnik bei den sog. SCR-Abgassystemen zur Anwendung kommen, ermöglicht das Ausgleichselement, die beim Gefrieren der wässrigen Harnstofflösung auftretende Volumenzunahme zu kompensieren, um dergestalt die durch Volumenzunahme bedingten schädlichen Druckeinflüsse auf das empfindliche Filterelementmaterial zu vermeiden, was ansonsten zu Funktionsunfähigkeit der Filtervorrichtung führen könnte, insbesondere wenn durch das Gefrieren des Fluidmaterials das Filterelementmaterial einen Riss oder dergleichen erfährt. Bei der erwähnten, bekannten Lösung ist das Ausgleichselement in Form eines ein kompressibles Medium enthaltenden Hohlkörpers durch eine Blase oder eine Membran gebildet, wie sie auch bei Blasen-Hydrospeichern bzw. Membran-Hydrospeichern Verwendung findet und ein Arbeitsgas, wie N₂, enthält.

Die DE 10 2017 011 278 A1 beschreibt eine Filtervorrichtung zum Filtern von Fluid, insbesondere in Form einer wässrigen Harnstofflösung, mit einem in einem Filtergehäuse angeordneten Filterelement sowie einem zum Kompensieren von Druck- oder Volumenschwankungen des Fluids vorgesehenen Ausgleichselement in Form eines elastisch nachgiebigen Hohlkörpers, der in einer Richtung eine größere räumliche Ausdehnung hat als quer dazu, der mittels einer Halteeinrichtung im Filtergehäuse gehalten ist und der mit seiner Trennwand eine Trennung zwischen dem Fluid und einem kompressiblen Medium vornimmt, wobei innerhalb des Hohlkörpers ein Stützkörper eingebracht ist, der sich von dem Hohlkörper in einer Nicht-Ausgleichsstellung zumindest teilweise in einem Abstand befindet und in mindestens einer Ausgleichsstellung als stützende Anlage für den Hohlkörper dient.

Weitere Filtervorrichtungen gehen aus der DE 10 2015 010 562 A1 und der DE 10 2010 027 069 B3 hervor.

Ausgehend von diesem Stand der Technik stellt sich die Erfindung die Aufgabe, eine Filtervorrichtung der eingangs genannten Gattung zur Verfügung zu stellen, die sich durch eine hohe Betriebssicherheit über lange Betriebszeiträume auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass der Stützkörper starr und innen zumindest teilweise mit einem Hohlraum versehen ist, der über eine medienführende Verbindungseinrichtung mit mindestens einem Raum zwischen Hohl- und Stützkörper verbunden ist, in dem das kompressible Medium aufgenommen ist. Als starrer Körper bildet der Stützkörper eine sichere mechanische Abstützung, während gleichzeitig das Vorhandensein des inneren Hohlraums des Stützkörpers, der mit dem Raum an der Innenseite der Membran in Verbindung steht, auch im Inneren des Stützkörpers ein Gasvolumen zur Verfügung stellt. Dadurch steht, mit Abzug des Wandvolumens des Stützkörpers, die gesamte Innenseite der Blase als Arbeitsgasvolumen zur Verfügung, so dass die Ausgleichseinrichtung mit weicher Kennlinie und damit guter Schutzwirkung für das Filterelement arbeitet.

Es ist ferner vorgesehen, dass innerhalb des Hohlkörpers ein Stützkörper eingebracht ist, der sich von dem Hohlkörper in einer Nicht-Ausgleichsstellung zumindest teilweise in einem Abstand befindet und in mindestens einer Ausgleichsstellung als stützende Anlage für den Hohlkörper dient. Dadurch steht mittels des Stützkörpers ein Entlastungsschutz für die Membran des Hohlkörpers zur Verfügung, durch den beim Ausgleichsvorgang die Verformung der Membran auf einen für die Langzeitfunktion unschädlichen Verformungsgrad begrenzbar ist, bei dem die Membran am Stützkörper zur Anlage kommt. Dadurch ist die Gefahr des Versagens der Membran beseitigt, wie sie bei der bekannten Lösung insbesondere bei sehr tiefen Temperaturen gegeben ist. Da die Filtration bei SCR-Abgassystemen bei mäßigem Fluid-Betriebsdruck erfolgt, steht der Hohlraum der Blase unter einem entsprechend niedrigen Fülldruck, was bei sehr niedrigen Temperaturen zu entsprechend stark abgesunkenem Innendruck und dadurch ungenügender Abstützung der Blase führt. Die sich hieraus ergebenden Risiken einer Überbelastung der Membran sind durch den erfindungsgemäß vorgesehenen, die Maximalverformung der Blase begrenzenden Stützkörper vermieden, so dass erhöhte Betriebssicherheit über lange Betriebszeiträume hinweg gewährleistet ist.

Mit Vorteil kann der Stützkörper in der Art eines Stabkörpers ausgebildet und aus einer Vielzahl von einzelnen Ringsegmenten zusammengesetzt sein, die zur Bildung der Verbindungseinrichtung von einzelnen Kanälen durchgriffen sind. Als zusammengesetzter Körper ist der Stützkörper trotz verringertem Werkstoffbedarf mit guter Strukturfestigkeit und mit ausreichendem Innenraum für das Arbeitsgas ausbildbar.

Mit Vorteil kann die Anordnung so getroffen sein, dass jeweils ein Ringsegment mit seiner einen Hälfte Bestandteil eines Schalenkörpers und mit seiner anderen Hälfte Bestandteil eines weiteren Schalenkörpers ist, die an ihren Stirnseiten zusammengesetzt den Stützkörper ergeben. Solche Teilkörper in Form einseitig offener Schalen mit innerer Ringstruktur lassen sich besonders einfach und rationell, beispielsweise aus Kunststoff, durch Spritzformen herstellen.

Für die Verbindung der einzelnen Teilvolumina im inneren Hohlraum des Stützkörpers können die einander benachbarten Ringsegmente über mindestens einen Längskanal miteinander medienführend verbunden sein, der ein weiterer Teil der Verbindungseinrichtung ist.

Mit Vorteil kann der Stützkörper in einem Mittenbereich parallel zu seiner Längsachse und im Querschnitt gesehen diametral einander gegenüberliegende Anlagestege aufweisen, an denen sich der Hohlkörper abstützt. Dadurch sind über die Gesamtlänge des Stützkörpers durchgehende Anlagestellen für die Abstützung der Membran gebildet.

Mit Vorteil kann die Anordnung hierbei so getroffen sein, dass zwischen den einander benachbarten Anlagestegen und dem Hohlkörper Kammern als Bestandteile des Raumes gebildet sind. Diese stellen Freiräume für die Ausgleichsbewegungen zwischen der Membran des Hohlkörpers und dem Stützkörper zur Verfügung.

Die Anordnung kann hierbei ferner so getroffen sein, dass der jeweilige Anlagesteg an seinen einander gegenüberliegenden Enden in kreisrunde Umfangsteile des Stützkörpers übergeht. An beiden Längsenden des Stützkörpers bilden diese Umfangsteile daher runde Abschlussstücke.

Bei vorteilhaften Ausführungsbeispielen trägt das eine Ende des Stützkörpers ein kuppelförmiges Abschlussstück, an dem sich das geschlossene Ende des Hohlkörpers abstützt. Mit seiner Kuppelform bildet dieses Abschlussstück einen Formkörper, der der Blasenform der den Hohlkörper bildenden Membran angepasst ist und die Blase bei fehlendem inneren Gasdruck in ihrer natürlichen Form hält.

In vorteilhafter Weise, wie dies auch bei Membran-Hydrospeichern üblich ist, kann die Halteeinrichtung für den Hohlkörper einen verdickten Endrand desselben umgreifen und mehrteilig ausgebildet sein. Dadurch ist eine sichere und druckdichte Festlegung der Membran ermöglicht.

Vorzugsweise ist das Filterelement zylindrisch ausgebildet und stützt sich auf seiner Innenseite an einem perforierten Stützrohr ab, das mit einem vorgebbaren radialen Abstand den Hohlkörper umgibt und mit seiner Länge über den Hohlkörper vorsteht. Während das Stützrohr das Filterelementmaterial im Normalbetrieb gegen die Strömungskraft abstützt, bildet es im Gefrierfall den Schutz des Elementmaterials gegen einen gegebenenfalls trotz des Volumenausgleichs verbleibenden restlichen Gefrierdruck.

In der bei Filterelementen üblichen Weise kann das Filterelement zwischen zwei Endkappen eingefasst sein, wobei eine Endkappe außenumfangsseitig den Fluideingang mit begrenzt und innenumfangsseitig den Fluidausgang mit umfasst und das eine freie Ende des Stützrohres mit aufnimmt. Dadurch, dass eine Endkappe sowohl den Fluideingang als auch den Fluidausgang bildet, kann die andere Endkappe durch ein einfaches Bauteil gebildet sein, an dem lediglich die Abdichtung gegenüber der Halteeinrichtung ausgebildet sein muss.

Nachstehend ist die Erfindung anhand eines in der Zeichnung dargestellten Ausführungsbeispiels im Einzelnen erläutert. Es zeigen:
- Fig. 1: eine in Längsrichtung aufgeschnitten gezeichnete perspektivische Schrägansicht des Ausführungsbeispiels der erfindungsgemäßen Filtervorrichtung;
- Fig. 2: einen Längsschnitt des Ausführungsbeispiels mit gegenüber der Darstellung von Fig. 1 verdrehter Lage der Schnittebene;
- Fig. 3: eine perspektivische Schrägansicht des auf halber Länge quer geschnittenen Ausführungsbeispiels;
- Fig. 4: eine perspektivische Schrägansicht eines eine Hälfte des Stützkörpers des Ausführungsbeispiels bildenden Stabkörpers, gesehen auf die offene Schalenseite; und
- Fig. 5: eine perspektivische Schrägansicht des Stabkörpers von Fig. 4, gesehen auf die Schalenaußenseite.

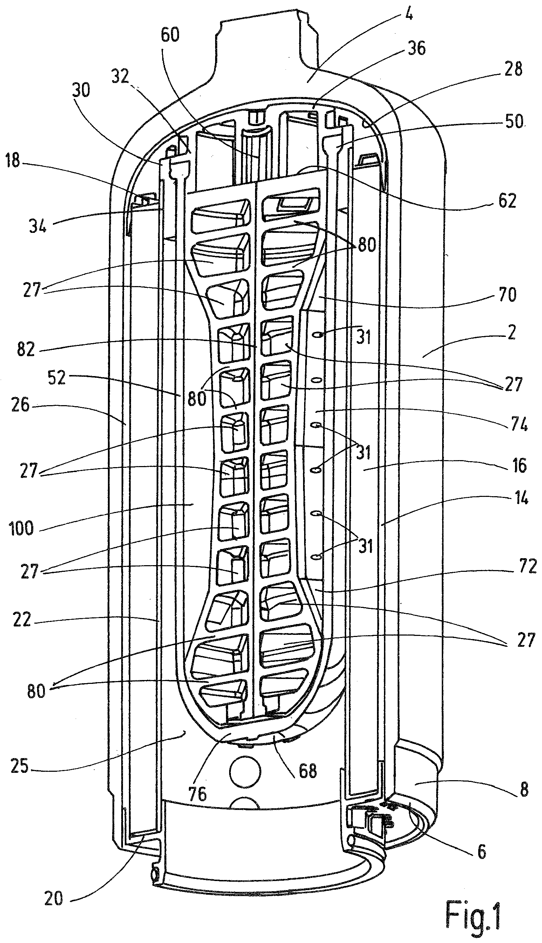

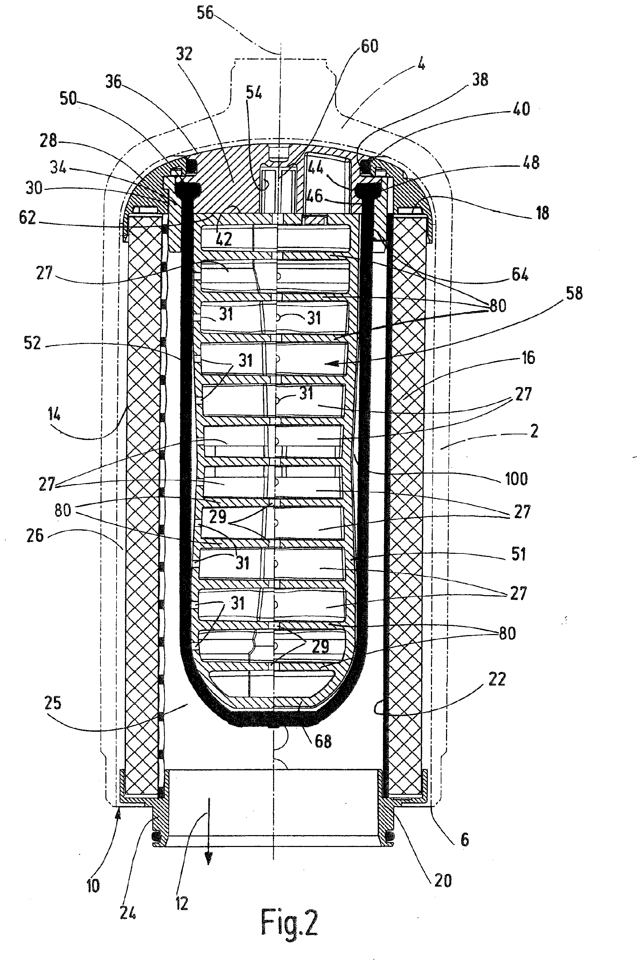

Unter Bezug auf die beigefügten Zeichnungen ist die Erfindung am Beispiel von Filtervorrichtungen beschrieben, die mit besonderem Vorteil bei SCR-Abgassystemen zur Filtration wässriger Harnstofflösungen einsetzbar sind. Das dargestellte Ausführungsbeispiel weist ein Filtergehäuse 2 in Form eines kreiszylindrischen Topfes mit in Fig. 1 und 2 oben liegendem, geschlossenen gewölbten Topfboden 4 und offenem unteren Ende 6 auf. Ein am unteren Ende 6 mit einem Außengewinde 8 des Gehäuses 2 verschraubbarer Abschlussdeckel, der in den Figuren weggelassen ist, weist einen Fluideinlass und einen Fluidauslass aus, um das abzureinigende Fluid über einen Eintrittsbereich, der mit einem Strömungspfeil 10 (Fig. 2) bezeichnet ist, in das Gehäuse 2 einzuführen und über einen Austrittsbereich, der mit einem Strömungspfeil 12 (Fig. 2) bezeichnet ist, aus dem Gehäuse 2 abzuführen. In letzterem ist ein Filterelement 14 aufgenommen, das ein einen Hohlzylinder bildendes Filtermedium 16 aufweist. Dieses ist in der bei derartigen Filtervorrichtungen üblichen Weise vorzugsweise plissiert und mehrlagig aufgebaut und erstreckt sich zwischen einer in Fig. 1 und 2 oben liegenden Endkappe 18 und einer Endkappe 20 am unteren Ende 6. Die Endkappen 18, 20 bilden in der bei Filtervorrichtungen üblichen Weise eine Einfassung für die stirnseitigen Enden des Filtermediums 16 sowie eines perforierten Stützrohres 22, das an der Innenseite des Filtermediums 16 anliegt. Die untere Endkappe 20, die einen nach unten vorstehenden Anschlussstutzen 24 für die Fluidverbindung mit dem nicht dargestellten Abschlussdeckel aufweist, ist zum inneren Filterhohlraum 25 offen, so dass das abgereinigte Fluid, wie mit Strömungspfeil 12 angedeutet, abführbar ist. Bei der in Fig. 1 und 2 gezeigten Einbaulage des Filterelements 14 ist dieses im Gehäuse 2 derart aufgenommen, dass sich die Außenseite des Filtermediums 16 in einem Abstand von der Gehäusewand befindet, so dass ein das Filtermedium 16 umgebender Zwischenraum 26 gebildet ist, der an den in Fig. 2 mit Strömungspfeil 10 bezeichneten Fluideinlass angrenzt, so dass der Zwischenraum 26 die Rohseite bei der Filtration bildet.

Die andere, obere Endkappe 18 besitzt die Form eines Ringkörpers, der an seiner vom Filtermedium 14 abgewandten Oberseite 28 eine Wölbung besitzt, die der Wölbung der Innenseite des Topfbodens 4 angepasst ist und im Einbauzustand bei Anlage für das Filterelement 14 die zentrierte Einbaulage vorgibt. Der Ringkörper der Endkappe 18 weist einen zentralen Durchgang 30 auf, der an seiner Innenseite den Sitz für eine Halteeinrichtung für das Ausgleichselement der Filtervorrichtung bildet. Die Halteeinrichtung weist einen inneren, runden Haltekörper 32 und einen diesen auf einem Außenumfangsabschnitt umgebenden Haltering 34 auf. Im Montagezustand, bei dem Haltekörper 32 und Haltering 34 in den Durchgang 30 des Ringkörpers der Endkappe 18 eingesetzt sind, setzt der Haltekörper 32 mit seiner gewölbten Oberseite 36 die Wölbung der Oberseite 28 der Endkappe 18 absatzlos fort, so dass Endkappe 18 und Haltekörper 32 vollflächig am Topfboden 4 anliegen. In der Nähe der Oberseite 36 ist im Haltekörper 32 eine Ringnut 38 für einen Dichtring 40 gebildet, der die Abdichtung der Halteeinrichtung im Durchgang 30 der Endkappe 18 bildet. An der der Oberseite 36 abgewandten Unterseite bildet der Haltekörper 32 eine ebene Anlagefläche 42. In dem Umfangsabschnitt zwischen der Ringnut 38 und der Anlagefläche 42 weist der Haltekörper 32 eine zweite Ringnut 44 auf, an die sich bis zur Anlagefläche 42 ein Umfangsabschnitt 46 mit verringertem Außendurchmesser anschließt. Die Ringnut 44 bildet zusammen mit einer Ausnehmung 48 des Halterings 34 den Sitz zur Festlegung eines verdickten Randwulstes 50 einer das Ausgleichselement bildenden Membran 52, die, wie die Blase eines Blasen-Hydrospeichers die Form eines länglichen Hohlkörpers besitzt und aus einem für aggressive Fluide, wie wässrige Harnstofflösungen, geeigneten Elastomer, wie Ethylen-Propylen-Dien-Kautschuk (EPDM) oder hydriertem Acryl-Nitrilbutadien-Kautschuk (HNBR) besteht.

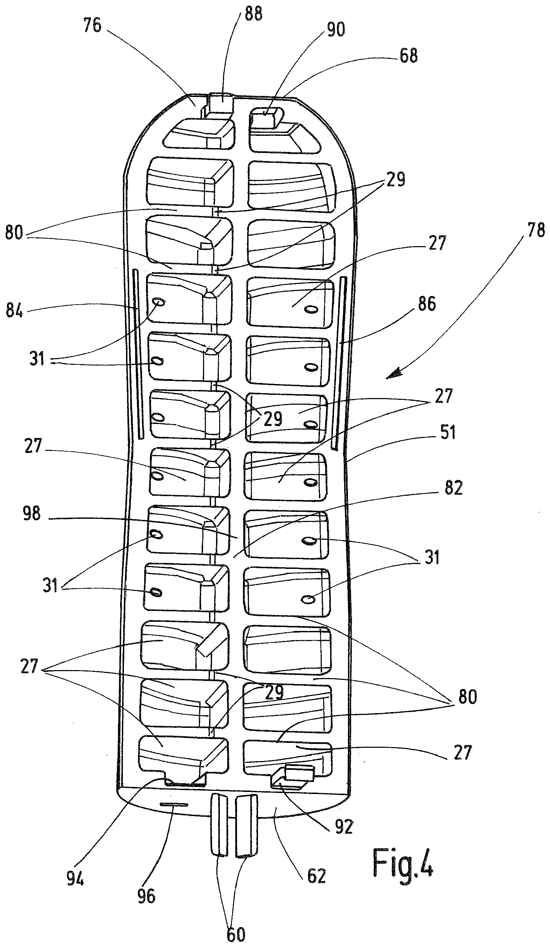

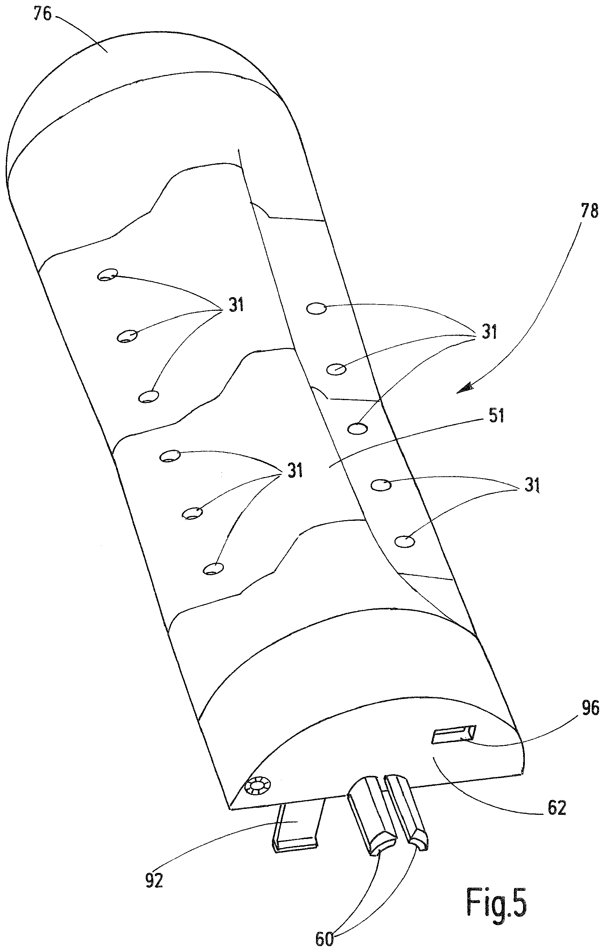

Der Haltekörper 32 bildet mit seiner ebenen Anlagefläche 42 und einer Buchse 54, die sich zur Vorrichtungslängsachse 56 koaxial von der Anlagefläche 42 weg erstreckt, die Halterung für einen Stützkörper 58. Dieser weist an seinem der Anlagefläche 42 zugewandten Ende axial vorstehende Haltefinger 60 (s. insbesondere Fig. 4 und 5) auf. Bei in die Buchse 54 eingesetzten Haltefingern 60, mit beispielsweise durch Kleben festgelegten Haltefingern 60, liegt der Stützkörper 58 mit ebener und im Umfang kreisrunder Abschlussfläche 62 an der Anlagefläche 42 des Haltekörpers 32 an. In dieser Montageposition (Fig. 1 und 2) erstreckt sich der Haltering 34 mit einem über die Anlagefläche 42 des Haltekörpers 32 vorstehenden Ringteil 64 in den Zwischenraum zwischen der Außenseite der Membran 52 und dem Stützrohr 22 des Filterelements 14.

Der in der Art eines Stabkörpers ausgebildete Stützkörper 58 ist aus einer Vielzahl von Ringsegmenten 66 zusammengesetzt, die in den Figuren der Übersichtlichkeit wegen nicht sämtliche beziffert sind. Die Ringsegmente 66 verlaufen in gleichen axialen Abständen voneinander in zur Längsachse 56 senkrechter Ebene und sind aus ebenen Flachscheiben gleicher Stärke gebildet. Lediglich das der Abschlussfläche 62 nächstgelegene Ringsegment 66 sowie das dem freien anderen Ende 68 nächstgelegene Ringsegment 66 sind im Umfang kreisrund. In den sich an die Abschlussfläche 62 und an das andere Ende 68 anschließenden Längenabschnitten 70 bzw. 72 (Fig. 1) nimmt die Querschnittsfläche der aufeinanderfolgenden Ringsegmente 66 jeweils ab, wobei ihr Umfang zunehmend von der Kreisform abweicht. Im zwischen den Abschnitten 70 und 72 gelegenem Mittelabschnitt 74 ist die Abweichung von der Kreisform am stärksten und die Querschnittsfläche in Wesentlichen gleichbleibend am geringsten. Mit einer am Umfangsrand der Ringsegmente 66 anliegenden Außenwand 51 besitzt der Stützkörper 58, wie in Fig. 1 gezeigt, hauptsächlich im Mittelabschnitt 74 eine eingeschnürte Außenkontur. An dem der Abschlussfläche 62 entgegengesetzten freien Ende 68 bildet ein kuppelförmiges Abschlussstück 76 der Außenwand 51 eine gewölbte Anlagefläche für die Abstützung der Membran 52 am Ende der Blase.

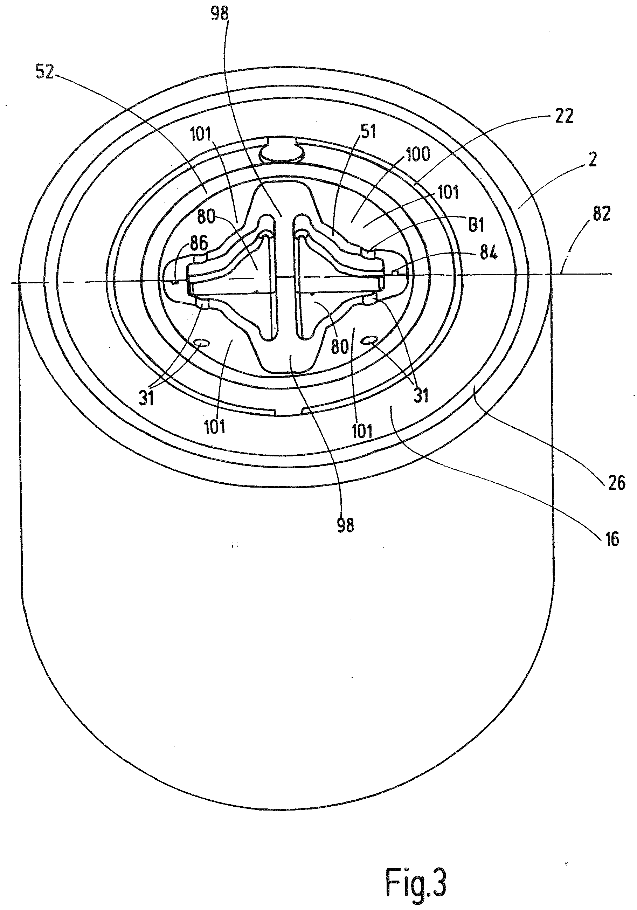

Wie am deutlichsten die Fig. 4 und 5 zeigen, ist der Stützkörper 58 aus zwei gleichen Hälften zusammengesetzt, die je durch einen Schalenkörper 78 in Form von Gleichteilen gebildet sind. In der Öffnung jeder Schale bilden Segmenthälften 80 (nur teilweise beziffert), wenn die Schalenkörper 78 an ihrer Trennebene 82 (Fig. 3 und 4) aneinanderliegen, zusammen die Ringsegmente 66. An der Trennebene 82 jedes Schalenkörpers 78 sind an zwei einander gegenüberliegenden Stellen eine vorspringende Rippe 84 und eine Nut 86 gebildet, die bei Aneinanderliegen der Schalenkörper 78 zur Bildung des Stützkörpers 58 als Passelemente miteinander in Eingriff sind. Zur Anlagesicherung der aneinanderliegenden Schalenkörper 78 sind am Abschlussstück 76 eine vorstehende Nase 88 und eine Ausnehmung 90 als weitere Passelemente ausgebildet, die bei Aneinanderliegen der Schalenkörper 78 miteinander in Eingriff kommen. Für die Lagesicherung der aneinanderliegenden Schalenkörper 78 gegen Abheben voneinander ist eine einen Rasthaken aufweisende Rastzunge 92 vorgesehen, die neben den Haltefingern 60 aus der Trennebene 82 vorsteht, sowie auf der gegenüberliegenden Seite neben den Haltefingern 60 eine Ausnehmung 94 gebildet, in deren Boden sich ein an der Abschlussfläche 62 offener Schlitz 96 befindet. Bei aneinanderliegenden Schalenkörpern 78 sind diese durch Eingriff der jeweiligen Zunge 92 in die zugehörige Ausnehmung 94 des anderen Schalenkörpers 78, wobei der Rasthaken der Zunge 92 in den Schlitz 96 der Ausnehmung 94 des anderen Schalenkörpers 78 eingreift, miteinander verrastet.

Wie die Fig. 3 zeigt, bilden Anlagestege 98, die sich auf einander diametral gegenüberliegenden Stellen des Stützkörpers 58 entlang der Längsachse 56 erstrecken, Abstützstellen für die Membran 52. Zwischen den Abstützstellen verläuft die Außenwand 51 des Stützkörpers 58 entsprechend der Außenkontur des Stützkörpers 58, die, wie am deutlichsten in Fig. 1 gezeigt ist, eine insbesondere im Mittenbereich stärker eingeschnürte Form besitzt, in örtlich unterschiedlich großem Abstand von der Membran 52, so dass aus zwischen den Anlagestegen 98 liegenden Kammern 101 ein bereichsweise unterschiedlich breiter Raum 100 im Inneren der Membran 52 als Freiraum für Ausgleichsbewegungen der Membran 52 gebildet ist, wobei die Maximalauslenkung der Membran 52 durch den Stützkörper 58 begrenzt ist, wenn sich die Membran 52 in dem freien Raum 100 bis zur Anlage am Stützkörper 52 bewegt. Wie Fig. 1, 2 und 4 zeigen, ist der Innenraum des Stützkörpers 58 durch die von den Teilsegmenten 80 gebildeten Ringsegmenten 66 und der Anlagestege 98 in Kammern 27 (nicht sämtlich beziffert) abgeteilt, die durch ebenfalls nicht sämtlich bezifferte Bohrungen 29, die die Teilsegmente 80 durchgreifen, miteinander in Verbindung sind. Wandbohrungen (ebenfalls nicht sämtlich beziffert) in der Außenwand 51 verbinden die Kammern 27 mit dem Raum 100 an der Innenseite der Membran 52. Dadurch steht nicht nur das Volumen des Raumes 100, sondern auch das Volumen sämtlicher Kammern 27 im Stützkörper 58 als Volumen für das Arbeitsgas im Innern der das Ausgleichselement bildenden Membran 52 zur Verfügung.

## Patentansprüche

1. Filtervorrichtung zum Filtern von Fluid, insbesondere in Form einer wässrigen Harnstofflösung, mit einem in einem Filtergehäuse (2) angeordneten Filterelement (14) sowie einem zum Kompensieren von Druck- oder Volumenschwankungen des Fluids vorgesehenen Ausgleichselement in Form eines elastisch nachgiebigen Hohlkörpers (52), der in einer Richtung eine größere räumliche Ausdehnung hat als quer dazu, der mittels einer Halteeinrichtung (32, 34) im Filtergehäuse (2) gehalten ist und der mit seiner Trennwand eine Trennung zwischen dem Fluid und einem kompressiblen Medium vornimmt, wobei innerhalb des Hohlkörpers (52) ein Stützkörper (58) eingebracht ist, der sich von dem Hohlkörper (52) in einer Nicht-Ausgleichsstellung zumindest teilweise in einem Abstand befindet und in mindestens einer Ausgleichsstellung als stützende Anlage für den Hohlkörper (52) dient, **dadurch gekennzeichnet, dass** der Stützkörper (58) starr und innen zumindest teilweise mit einem Hohlraum (27) versehen ist, der über eine medienführende Verbindungseinrichtung (29, 31) mit mindestens einem Raum (100) zwischen Hohl- (52) und Stützkörper (58) verbunden ist, in dem das kompressible Medium aufgenommen ist.

2. Filtervorrichtung nach Anspruch 1, **dadurch gekennzeichnet, dass** der Stützkörper (58) in der Art eines Stabkörpers ausgebildet ist und aus einer Vielzahl von einzelnen Ringsegmenten (66) zusammengesetzt ist, die zur Bildung der Verbindungseinrichtung von einzelnen Kanälen (29) durchgriffen sind.

3. Filtervorrichtung nach Anspruch 2, **dadurch gekennzeichnet, dass** jeweils ein Ringsegment (66) mit seiner einen Hälfte (80) Bestandteil eines Schalenkörpers (78) und mit seiner anderen Hälfte (80) Bestandteil eines weiteren Schalenkörpers (78) ist, die an ihren Stirnseiten (82) zusammengesetzt den Stützkörper (58) ergeben.

4. Filtervorrichtung nach Anspruch 2 oder 3, **dadurch gekennzeichnet, dass** die einander benachbarten Ringsegmente (66) über mindestens einen Längskanal (29) miteinander medienführend verbunden sind, der ein weiterer Teil der Verbindungseinrichtung (29, 31) ist.

5. Filtervorrichtung nach einem der vorstehenden Ansprüche, **dadurch gekennzeichnet, dass** der Stützkörper (58) in einem Mittenbereich parallel zu seiner Längsachse und im Querschnitt gesehen diametral einander gegenüberliegende Anlagestege (98) aufweist, an denen sich der Hohlkörper (52) abstützt.

6. Filtervorrichtung nach einem der vorstehenden Ansprüche, **dadurch gekennzeichnet, dass** zwischen den einander benachbarten Anlagestegen (98) und dem Hohlkörper (52) Kammern (101) als Bestandteile des Raums (100) gebildet sind.

7. Filtervorrichtung nach einem der vorstehenden Ansprüche, **dadurch gekennzeichnet, dass** der jeweilige Anlagesteg (98) an seinen einander gegenüberliegenden Enden in kreisrunde Umfangsteile (62, 68) des Stützkörpers (58) übergeht.

8. Filtervorrichtung nach einem der vorstehenden Ansprüche, **dadurch gekennzeichnet, dass** das eine Ende des Stützkörpers ein kuppelförmiges Abschlussstück (76) trägt, an dem sich das geschlossene Ende des Hohlkörpers (52) abstützt.

9. Filtervorrichtung nach einem der vorstehenden Ansprüche, **dadurch gekennzeichnet, dass** die Halteeinrichtung (32, 34) für den Hohlkörper (52) einen verdickten Endrand (50) desselben umgreift und mehrteilig ausgebildet ist.

10. Filtervorrichtung nach einem der vorstehenden Ansprüche, **dadurch gekennzeichnet, dass** das Filterelement (14) zylindrisch ausgebildet sich auf seiner Innenseite an einem perforierten Stützrohr (22) abstützt, das mit einem vorgebbaren radialen Abstand den Hohlkörper (52) umgibt und mit seiner Länge über den Hohlkörper (52) vorsteht.

11. Filtervorrichtung nach einem der vorstehenden Ansprüche, **dadurch gekennzeichnet, dass** das Filterelement (14) zwischen zwei Endkappen (18, 20) eingefasst ist und dass die eine Endkappe (20) außenumfangsseitig den Fluideingang (10) mit begrenzt und innenumfangsseitig den Fluidausgang (12) mit umfasst und das eine freie Ende des Stützrohres (22) mit aufnimmt.

## Claims

1. Filter device for filtering fluid, in particular in the form of an aqueous urea solution, having a filter element (14) arranged in a filter housing (2) as well as a compensating element, provided for compensating pressure or volume fluctuations in the fluid, in the form of an elastically yielding hollow body (52) which has a greater spatial extent in one direction than transverse thereto, which is held in the filter housing (2) by means of a holding device (32, 34) and which separates the fluid from a compressible medium with its partition wall, wherein a supporting body (58) is inserted inside the hollow body (52), said supporting body being at least partially spaced from the hollow body (52) in a non-compensating position and serving as a supporting abutment for the hollow body (52) in at least one compensating position, **characterised in that** the supporting body (58) is rigid and provided at least partially with a cavity (27) on the inside, which is connected via a media-conducting connecting device (29, 31) to at least one space (100) between the hollow body (52) and the supporting body (58) in which space the compressible medium is held.

2. Filter device according to claim 1, **characterised in that** the supporting body (58) is configured in the manner of a rod body and is composed of a plurality of individual ring segments (66) through which individual channels (29) pass to form the connecting device.

3. Filter device according to claim 2, **characterised in that** in each case a ring segment (66) with its one half (80) is a component of a shell body (78) and with its other half (80) is a component of a further shell body (78) which put together on their end faces (82) produce the supporting body (58).

4. Filter device according to claim 2 or 3, **characterised in that** the ring segments (66) adjacent to each other are connected to each other in a media-conducting manner via at least one longitudinal channel (29) which is a further part of the connecting device (29, 31).

5. Filter device according to one of the preceding claims, **characterised in that** the supporting body (58) has, in a central region parallel to its longitudinal axis and viewed in cross-section, diametrically opposing abutment webs (98) on which the hollow body (52) is supported.

6. Filter device according to one of the preceding claims, **characterised in that** chambers (101) are formed, as components of the space (100), between the abutment webs (98) which are adjacent to each other and the hollow body (52).

7. Filter device according to one of the preceding claims, **characterised in that** the respective abutment web (98) merges at its ends opposing each other into circular circumferential parts (62, 68) of the supporting body (58).

8. Filter device according to one of the preceding claims, **characterised in that** the one end of the supporting body bears a dome-shaped end piece (76) on which the closed end of the hollow body (52) is supported.

9. Filter device according to one of the preceding claims, **characterised in that** the holding device (32, 34) for the hollow body (52) encompasses a thickened end edge (50) thereof and is configured in multiple parts.

10. Filter device according to one of the preceding claims, **characterised in that** the filter element (14) is cylindrical and is supported on its inside on a perforated supporting tube (22) which surrounds the hollow body (52) with a predefinable radial gap and protrudes with its length beyond the hollow body (52).

11. Filter device according to one of the preceding claims, **characterised in that** the filter element (14) is enclosed between two end caps (18, 20) and **in that** the one end cap (20) defines the fluid inlet (10) on the outer circumference side and also encompasses the fluid outlet (12) on the inner circumference side and also holds the one free end of the supporting tube (22).

## Revendications

1. Installation de filtration pour filtrer du fluide, notamment sur la forme d'une solution aqueuse d'urée, comprenant un élément (14) de filtre, disposé dans une enveloppe (2) de filtre, ainsi qu'un élément de compensation, prévu pour compenser des fluctuations de pression ou de volume du fluide, sous la forme d'une pièce (52) creuse cédant élastiquement, qui a, dans une direction, une étendue dans l'espace plus grande que transversalement à celle-ci, qui est maintenue dans l'enveloppe (2) de filtre au moyen d'un dispositif (32, 34) de maintien et qui effectue, par sa paroi de séparation, une séparation entre le fluide et un milieu compressible, dans laquelle, à l'intérieur de la pièce (52) creuse est logée une pièce (58) d'appui, qui se trouve au moins en partie à une certaine distance de la pièce (52) creuse dans une position de non compensation et qui sert, dans au moins une position de compensation, d'aménagement d'appui pour la pièce (52) creuse, **caractérisée en ce que** la pièce (58) d'appui est pourvue rigidement et à l'intérieur au moins en partie d'une cavité (27), qui, par un dispositif (29, 31) de communication conduisant des fluides, communique avec au moins un espace (100) entre la pièce (52) creuse et la pièce (58) d'appui, dans lequel est reçu le milieu compressible.

2. Installation de filtration suivant la revendication 1, **caractérisée en ce que** la pièce (58) d'appui est constituée à la manière d'un corps en barreau et est composée d'une pluralité de segments (66) annulaires individuels, qui sont traversés de canaux (29) individuels pour la formation du dispositif de communication.

3. Installation de filtration suivant la revendication 2, **caractérisée en ce que** respectivement un segment (66) annulaire fait, par l'une de ses moitiés (80), partie d'une pièce (78) de coque et, par son autre moitié (80), fait partie d'une autre pièce (78) de coque, qui, mises ensemble sur leurs côtés (82) frontaux, donnent la pièce (58) d'appui.

4. Installation de filtration suivant la revendication 2 ou 3, **caractérisée en ce que** les segments (66) annulaires voisins l'un de l'autre communiquent en conduite de fluide les uns avec les autres par au moins un canal (29) longitudinal, qui est une autre partie du dispositif (29, 31) de communication.

5. Installation de filtration suivant l'une des revendications précédentes, **caractérisée en ce que** la pièce (58) d'appui a, dans une région médiane, parallèlement à son axe longitudinal et, considéré en section transversale, des nervures (98) de contact opposées diamétralement les unes aux autres, sur lesquelles s'appuie la pièce (52) creuse.

6. Installation de filtration suivant l'une des revendications précédentes, **caractérisée en ce qu'**entre les nervures (98) de contact voisines les unes des autres et la pièce (52) creuse sont formées des chambres (101) comme parties constitutives de l'espace (100).

7. Installation de filtration suivant l'une des revendications précédentes, **caractérisée en ce que** la nervure (98) respective de contact se transforme à ses extrémités opposées l'une à l'autre en des parties (62, 68) de pourtour circulaire de la pièce (58) d'appui.

8. Installation de filtration suivant l'une des revendications précédentes, **caractérisée en ce que** l'une des extrémités de la pièce d'appui porte une pièce (76) de fermeture en forme de coupelle, sur laquelle s'appuie l'extrémité fermée de la pièce (52) creuse.

9. Installation de filtration suivant l'une des revendications précédentes, **caractérisée en ce que** le dispositif (32, 34) de maintien de la pièce (52) creuse entoure un bord (50) d'extrémité épaissi de celle-ci et est constitué de plusieurs pièces.

10. Installation de filtration suivant l'une des revendications précédentes, **caractérisée en ce que** l'élément (14) de filtre, de constitution cylindrique, s'appuie par sa face intérieure sur un tube (22) d'appui perforé, qui entoure la pièce (52) creuse à une distance radiale pouvant être donnée à l'avance et qui par sa longueur est en dépassement de la pièce (52) creuse.

11. Installation de filtration suivant l'une des revendications précédentes, **caractérisée en ce que** l'élément (14) de filtre est enchâssé entre deux coiffes (18, 20) d'extrémité et **en ce que** l'une des coiffes (20) d'extrémité limite, du côté du pourtour extérieur, l'entrée (10) de fluide et entoure, du côté du pourtour intérieur, la sortie (12) de fluide et reçoit la une extrémité libre du tube (22) d'appui.
